(19) Europäisches Patentamt
European Patent Office
Office européen des brevets

(11) EP 1 746 115 A1

(12) **EUROPEAN PATENT APPLICATION**
published in accordance with Art. 158(3) EPC

(43) Date of publication:
**24.01.2007 Bulletin 2007/04**

(21) Application number: **05730190.5**

(22) Date of filing: **12.04.2005**

(51) Int Cl.:
***C08F 290/12*** *(2006.01)* ***C08F 4/40*** *(2006.01)*

(86) International application number:
**PCT/JP2005/007045**

(87) International publication number:
**WO 2005/105877 (10.11.2005 Gazette 2005/45)**

(84) Designated Contracting States:
**AT BE BG CH CY CZ DE DK EE ES FI FR GB GR HU IE IS IT LI LT LU MC NL PL PT RO SE SI SK TR**

(30) Priority: **27.04.2004 JP 2004130907**

(71) Applicant: **Kaneka Corporation**
**Kita-ku**
**Osaka-shi, Osaka 530-8288 (JP)**

(72) Inventors:
- **SAKAMOTO, Harumi**
  **5660073, Osaka (JP)**
- **FUKUI, Yoshifumi**
  **5600085, Osaka (JP)**

(74) Representative: **Vossius & Partner**
**Siebertstrasse 4**
**81675 München (DE)**

# (54) POLYOLEFIN GRAFT COPOLYMER, COMPOSITION, AND PROCESS FOR PRODUCING THE SAME

(57) A polyolefin graft copolymer formed by graft copolymerization of an olefinic monomer and a macromonomer and the production process therefor are provided. The polyolefin graft copolymer is produced from a macromonomer obtained by radical emulsion polymerization of a vinyl monomer, by using a redox initiator containing a polymerization initiator, an activator, a reductant, and an oxygen coordination type-chelating age.

EP 1 746 115 A1

## Description

Technical Field

The present invention relates to polyolefin copolymers produced from macromonomers prepared by radical emulsion polymerization of vinyl monomers. In particular, the present invention relates to a polyolefin graft copolymer produced by copolymerization of an olefinic monomer and a macromonomer thereof in the presence of a coordination polymerization catalyst. It further relates to a production process therefor and a composition thereof.

Background Art

Polyolefin resin is industrially produced by coordination polymerization. As the coordination polymerization catalyst for olefins, a Ziegler-Natta catalyst and a metallocene catalyst are well known; however, when these early transition metal coordination polymerization catalysts are used, polar compounds disadvantageously react or coordinate with a complex or a catalytic active species, thereby resulting in loss of activity and decomposition. Thus, it has been difficult to copolymerize a polyolefin with a monomer having a polar functional group for imparting functionality or conduct olefin polymerization in an emulsion polymerization system.

As a coordination polymerization catalyst having high resistance to polar compounds, late transition metal complex-based coordination polymerization catalysts are known. As described in various introductory remarks (nonpatent document 1, nonpatent document 2, and nonpatent document 3), these catalysts maintain activity and can polymerize polyolefin even in the presence of a polar solvent, e.g., tetrahydrofuran, ether, acetone, ethyl acetate, or water, and, furthermore, a copolymer of polyolefin and a polar monomer, e.g., a polar vinyl monomer such as alkyl acrylate or the like, can be obtained. However, even with these catalysts, there has been a limit on the amount of the polar monomer that can be copolymerized with polyolefin. A technique that can yield a polyolefin copolymer with a high polar monomer content has been eagerly awaited.

To overcome these problems, a copolymer produced by copolymerization of a macromonomer and an olefinic monomer has been disclosed (patent document 1). According to this technique, a (meth)acryl macromonomer or an isobutylene macromonomer produced by solution polymerization, emulsion polymerization, or the like, can be used as a macromonomer, for example. However, when polymerization is conducted by dispersing a coordination polymerization catalyst and an olefinic monomer in a latex of a (meth)acryl macromonomer produced by emulsion polymerization, the olefin polymerization rate is low for some types of (meth)acryl macromonomer latex used and thus a large amount of catalyst has been required.

[Patent document 1] Japanese Unexamined Patent Application Publication No. 2003-147032
[Nonpatent document 1] Chemical Review, 2000, vol. 100, p. 1169
[Nonpatent document 2] Journal of Synthetic Organic Chemistry, Japan 2000, vol. 58, p. 293
[Nonpatent document 3] Angewandte Chemie International Edition, 2002, vol. 41, p. 544

Disclosure of Invention

Problems to be Solved by the Invention

An object of the present invention is to provide a graft copolymer by graft copolymeraizing an olefinic monomer with a macromonomer produced by radical emulsion polymerization of a vinyl monomer, in particular, a macromonomer having a polar group. Another object is to provide a composition containing a polyolefin graft copolymer and their production processes.

Means for Solving the Problems

In order to overcome the above-described problems, the present inventors have conducted extensive studies and found that a particular component in the initiator used in the industrial production of a latex inhibits the olefin coordination polymerization and that the olefin polymerization activity becomes satisfactory when a macromonomer latex produced using an initiator that does not contain this particular component is used as the raw material. Thus, the present invention has been made.

The present invention relates to a polyolefin graft copolymer produced from a macromonomer obtained by radical emulsion polymerization of a vinyl monomer using a redox initiator containing a polymerization initiator, an activator, a reductant, and an oxygen coordination type chelating agent.

According to a preferred embodiment, the polyolefin graft copolymer is produced by copolymerizing an olefinic

monomer and a macromonomer in the presence of a coordination polymerization catalyst in a latex.

According to another preferred embodiment, the coordination polymerization catalyst is a complex containing a ligand having two imine nitrogen atoms and a late transition metal selected from groups 8 to 10 in the periodic table.

The present invention also relates to a process for producing the polyolefin graft copolymer described above.

The present invention also relates to a thermoplastic resin composition containing the polyolefin graft copolymer described above.

Advantages of the Invention

When the macromonomer of the present invention is copolymerized with the polyolefin, the polymerization activity of the olefin is high; thus, by using the macromonomer as the starting material, the production efficiency of the polyolefin copolymers can be improved.

Brief Description of the Drawings

Fig. 1 shows ethylene reaction rates.

Best Mode for Carrying Out the Invention

The present invention will now be described in detail.

The present invention relates to a polyolefin graft copolymer produced from a macromonomer obtained by radical emulsion polymerization of vinyl monomers in the presence of a redox initiator containing a polymerization initiator, an activator, a reductant, and an oxygen coordination type chelating agent. In particular, it relates to a polyolefin graft copolymer produced by copolymerization of an olefinic monomer with a macromonomer in the presence of a coordination polymerization catalyst in a latex.

For the purpose of this description of the present invention, "polyolefin graft copolymer" is defined as a copolymer obtained by graft copolymerization of an olefin and a macromonomer. For the purpose of this description of the present invention, "macromonomer" is defined as an oligomer or polymer having a functional group copolymerizable with another monomer. As for the main chain structure, the position of introducing a functional group, and the production process of general macromonomers, various types are known. Examples of the main chain structures known include a linear structure, a cyclic structure, a branched structure, crosslinked particles, non-crosslinked particles, single-layer particles, multilayer particles, and multiphase particles. Examples of the position of introducing the functional group known include inside the main chain, inside the side chain, one end of a linear molecule, both ends of a linear molecule, and inside or on a surface of single-layer or multilayer particles. Examples of the production process known include anionic polymerization, cationic polymerization, radical polymerization, coordination polymerization, polycondensation, bulk polymerization, solution polymerization, suspension polymerization, and emulsion polymerization. The macromonomer of the present invention must be a macromonomer produced by a particular process, i.e., radical emulsion polymerization of vinyl monomers in the presence of a redox initiator containing a polymerization initiator, an activator, a reductant, and an oxygen coordination type chelating agent.

To graft copolymerize a macromonomer with an olefinic monomer, the macromonomer must have a group copolymerizable with the olefin. The macromonomer preferably contains at least one, more preferably at least 10 groups copolymerizable with olefin per molecule from the standpoint of high grafting efficiency. The group copolymerizable with the olefin may be any functional group but is preferably allyl-terminated, cyclic olefin-terminated, styryl-terminated, or (meth)acryl-terminated, and more preferably (meth)acryl-terminated, allyl-terminated, or dicyclopentenyl-terminated from the standpoint of high reactivity in coordination polymerization.

The macromonomer produced by the emulsion polymerization used in the present invention may be homogeneous particles with only one layer or multilayer particles including a plurality of layers. Alternatively, the macromonomer may be salami-type multi-phase particles in which a resin phase is dispersed in a matrix resin phase.

When the macromonomer produced by the emulsion polymerization used in the present invention is homogeneous particles with only one layer, there are various types of such a macromonomer known, including (meth)acryl, aromatic vinyl, and vinyl cyanide macromonomers. Although any of these is suitable for use, the macromonomer is preferably a (meth)acryl macromonomer, the main component of which is poly(meth)acrylate. For the purpose of this description, "(meth)acryl" means both methacryl and acryl.

When the macromonomer produced by the emulsion polymerization used in the present invention is a multilayer macromonomer, the macromonomer may include layers all made by radical polymerization; alternatively, the macromonomer may be produced by copolymerizing the layer made by a polymerization technique other than the radical polymerization with another monomer which is radically polymerizable. For the purpose of the description of the present invention, "multilayer macromonomer" is defined as a macromonomer produced by graft emulsion copolymerization of a polymer, which is produced by emulsion-polymerizing at least one emulsion-polymerizable monomer, with a monomer of a different type or different composition. The technique of producing the polymer having a multilayer structure by emulsion polymerization is known and disclosed in Japanese Unexamined Patent Application Publication Nos. 2001-89648, 2002-363372, and 10-316724, etc.

The single-layer (meth)acryl macromonomer, which is one example of the macromonomer produced by the emulsion polymerization used in the present invention, is preferably a (meth)acryl macromonomer obtained by copolymerization of (A) a (meth)acrylic monomer (also referred to as "compound (A)" hereinafter) and (B) a monomer having, in a molecule, at least one radically polymerizable unsaturated group and at least one group copolymerizable with an olefinic monomer (also referred to as "compound (B) hereinafter). If necessary, (C) a monomer (also referred to as "compound (C)" hereinafter) having a radically polymerizable unsaturated group that can be copolymerized with the compound (A) and/or compound (B) may be contained. The amounts of the individual components are not particularly limited and may be any amounts; however, the amount of the compound (A) is preferably 50 to 99.99 wt% and more preferably 75 to 99.9 wt%. If the amount of the compound (A) is excessively small and the resulting polyolefin graft copolymer is added to a thermoplastic resin such as a polyolefin resin, the effect of improving the properties expected from the characteristics of the (meth)acryl polymer, i.e., the properties that arise due to the polar characteristics or as a result of the polarity such as a low contact angle, high surface tension, wettability, adhesiveness, coatability, dyeing affinity, high dielectric constant, high frequency sealing ability, and the like, may decrease. The amount of the compound (B) is preferably 0.01 to 25 wt% and more preferably 0.1 to 10 wt%. When the amount of compound (B) is excessively low, grafting with the olefinic monomer does not progress sufficiently. When the amount is excessively high, there is an economical disadvantage since the compound (B) is generally expensive. The amount of compound (C) is preferably 0 to 50 wt% and more preferably 0 to 25 wt%. When the amount of compound (C) is excessively high and the polyolefin graft copolymer is added to a polyolefin resin, the effect of improving the properties expected due to the characteristics of the (meth)acryl polymer may be decreased. The total amount of the compound (A), compound (B), and compound (C) is 100 wt%.

The compound (A) is a component for forming the main skeleton of the (meth)acryl macromonomer. Examples of the compound (A) include, but are not limited to, alkyl acrylates such as methyl acrylate, ethyl acrylate, propyl acrylate, n-butyl acrylate, tert-butyl acrylate, 2-ethylhexyl acrylate, 2-hydroxyethyl acrylate, 2-hydroxypropyl acrylate, and methoxytripropylene glycol acrylate; alkyl methacrylates such as methyl methacrylate, ethyl methacrylate, butyl methacrylate, 2-ethylhexyl methacrylate, lauryl methacrylate, benzyl methacrylate, glycidyl methacrylate, and hydroxyethyl methacrylate; and (meth)acrylic acids such as acrylic acid and methacrylic acid, acid anhydrides thereof, and metal salts thereof. Of these, from the standpoint of the availability of the (meth)acryl macromonomer obtained and economical efficiency, an alkyl (meth)acrylate having a $C_2$-$C_{18}$ alkyl group is particularly preferable, and n-butyl acrylate, tert-butyl acrylate, methyl methacrylate, butyl methacrylate, glycidyl methacrylate, and 2-hydroxyethyl acrylate are yet more preferable. These compounds (A) may be used alone or in combination.

The component (B) which forms a copolymer with the component (A) and, in some instances, the component (C) through its radically polymerizable unsaturated group and which introduces a group copolymerizable with an olefinic monomer into the side chain or an end of the copolymer is a component that enables graft copolymerization of the copolymer and the olefinic monomer. The group copolymerizable with the olefinic monomer is not particularly limited and may be any functional group, and may be located at any position, i.e., inside or at an end, in the monomer molecule. From the standpoint of high reactivity in coordination polymerization, the group is preferably allyl-terminated ($\alpha$-olefin structure), cyclic olefin-terminated, styryl terminated, or (meth)acryl terminated, and particularly preferably, (meth)acryl-terminated, allyl-terminated, or dicyclopentenyl-terminated.

When the group copolymerizable with the olefinic monomer has both radical polymerizability and coordination polymerizability, the radically polymerizable unsaturated group contained in the component (B) may be the same as or different from the group copolymerizable with the olefinic monomer. When the two groups are the same, the component (B) contains two or more radically polymerizable unsaturated groups (which are also copolymerizable with the olefinic monomer) per molecule. However, during the synthesis of the (meth)acryl macromonomer, the reaction can be controlled by terminating the reaction when the radically polymerizable unsaturated groups proceed with the radical polymerization reaction to a certain extent that unreacted radically polymerizable unsaturated groups (which are also copolymerizable with the olefinic monomer) can remain in the resulting (meth)acryl macromonomer.

The representative examples of the compound (B) include allyl methacrylate, allyl acrylate, diallyl phthalate, triallyl cyanurate, triallyl isocyanurate, ethylene glycol diacrylate, and ethylene glycol dicyclopentenyl ether methacrylate. These compounds (B) can be used alone or in combination. Among these, allyl methacrylate and ethylene glycol dicyclopentenyl ether methacrylate are preferable for their high graft efficiency with the polyolefinic monomer.

The compound (C) is a component for adjusting various properties, e.g., elastic modulus, Tg, and index of refraction, of the (meth)acryl macromonomer. Any monomer copolymerizable with the compound (A) and/or the compound (B) may be used as the compound (C) without limitation in particular, and the compound (C) may be used singly or in combination of two or more compounds. Examples of such a compound (C) include, but are not limited to, styrene, α-methylstyrene, 1-vinylnaphthalene, 2-vinylnaphthalene, 1,3-butadiene, isoprene, chloroprene, acrylonitrile, methacrylonitrile, vinyl acetate, and vinyl ethyl ether.

The (meth)acryl macromonomer used in the present invention may be obtained as a latex by radical (co) polymerization with a typical emulsion polymerization technique.

During the emulsion polymerization, all of the starting materials may be fed once, or the starting materials may be continuously or intermittently added in fractions after feeding some of the starting materials. For example, the reaction caused by adding the compound (B) after reacting the compound (A) can yield a designed structure in which coordination polymerizable unsaturated groups are locally present on the surface layers of the (meth)acryl macromonomer particles. A process in which the compound (A), the compound (B), the compound (C), or a mixture thereof may be emulsified in advance using an emulsifier and water, and a process in which an emulsifier or an aqueous solution of an emulsifier is added either continuously or in fractions separately from the compound (A), the compound (B), the compound (C), or a mixture thereof, or the like may be used.

The amount of water used in the emulsion polymerization is not particularly limited. The amount should be sufficient to allow emulsification of the compounds (A), (B), and (C). In general, the amount of water is 1 to 20 times the total amount of the compounds (A), (B), and (C). If the amount of water used is excessively small, the proportion of the hydrophobic compounds (A), (B), and (C) becomes excessively large. As a result, the emulsion does not undergo phase transfer from water-in-oil to oil-in-water, and water rarely forms a continuous layer. When the amount of water used is excessively large, stability is degraded, and the production efficiency is decreased.

The emulsifier for emulsion polymerization may be any known emulsifier. Any of anionic, cationic, and nonionic emulsifiers may be used without a particular limitation. Anionic emulsifiers, such as alkali metal salts of alkylbenzene sulfonic acid, alkali metal salts of alkyl sulfuric acid, and alkali metal salts of alkylsulfosuccinic acid, are preferable due to their good emulsifying property. The amount of the emulsifier used is not particularly limited and may be adequately adjusted according to the average particle size of the target (meth)acryl macromonomer and the like. Preferably, the amount of the emulsifier is 0.1 to 10 parts by weight per 100 parts by weight of the monomer. The average particle size of the (meth)acryl macromonomer can be controlled by a typical emulsion polymerization technique such as increasing or decreasing the amount of the emulsifier used. The average particle size of the (meth)acryl macromonomer is preferably 20 to 1500 nm, more preferably 25 to 1000 nm, and most preferably 30 to 500 nm since the polyolefin graft copolymer obtained by the copolymerization exhibits satisfactory dispersibility when blended with a thermoplastic resin.

A known redox initiator can be used as a polymerization initiator for emulsion polymerization. A redox initiator is composed of a polymerization initiator, an activator (metal salt or a metal complex), a chelating agent, and a reductant. In the present invention, an oxygen coordination type chelating agent is used as the chelating agent. For the purpose of this description, "oxygen coordination type chelating agent" means a chelating agent of a type in which the atom that coordinates to the metal ion is oxygen.

Examples of the polymerization initiator in the redox catalyst include persulfates such as potassium persulfate and ammonium persulfate; alkyl hydroperoxides such as tert-butyl hydroperoxide and cumene hydroperoxide; diacyl peroxides such as benzoyl peroxide; dialkyl peroxides such as di-tert-butyl peroxide and tert-butyl peroxylaurate; and azo compounds such as 2,2'-azobisisobutyronitrile and 2,2'-azobis-2,4-dimethylvaleronitrile. Among these, persulfates and alkyl hydroperoxides are preferable.

Examples of the reductant in the redox catalyst include glucose, dextrose, sodium formaldehyde sulfoxylate, sodium sulfite, sodium hydrogen sulfite, sodium thiosulfate, ascorbic acid, and isoascorbic acid. Sodium formaldehyde sulfoxylate is particularly preferable since it is less expensive and exhibits high activity.

Examples of the oxygen coordination type chelating agent include oxycarboxylic acids, such as citric acid, gluconic acid, and oxalic acid, and metal salts thereof. Of these, citric acid is particularly preferable for its low toxicity, safety, and high activity. Chelating agents, such as polyaminocarboxylates, e.g., ethylenediaminetetraacetate, other than those of the oxygen-coordinated type would inhibit olefin coordination polymerization and are thus not preferable.

Examples of the activator include salts or chelates of metals such as iron, copper, manganese, silver, platinum, vanadium, nickel, chromium, palladium, and cobalt. Particularly preferable examples are ferrous sulfate, copper sulfate, and potassium hexacyanoferrate(III). The activator and the chelating agent may be used in separate components or may be previously reacted with each other so that the resulting metal complex can be used.

The combination of the initiator, activator, chelating agent, and reductant is not particularly limited and may be adequately selected. Examples of the preferable combination of the activator, chelating agent, and reductant include: ferrous sulfate/citric acid/sodium formaldehyde sulfoxylate; ferrous sulfate/citric acid/D-isoascorbic acid; and copper sulfate/citric acid/sodium formaldehyde sulfoxylate. The combination of ferrous sulfate/citric acid/sodium formaldehyde sulfoxylate is particularly preferable. The combination is not limited by these. The amount of the initiator used is preferably 0.005 to 2 parts by weight and more preferably 0.01 to 1 part by weight per 100 parts by weight of the monomer. The amount of the chelating agent is preferably 0.005 to 5 parts by weight and more preferably 0.01 to 3 parts by weight per

100 parts of the monomer. The amount of the activator used is preferably 0.005 to 2 parts by weight and more preferably 0.01 to 1 part by weight per 100 parts by weight of the monomer. When the amount used is within this range, the polymerization rate is sufficiently high and coloring of the product and precipitation can be advantageously reduced.

For the emulsion polymerization, a chain transfer agent may be used if necessary. The chain transfer agent is not particularly limited and may be any known agent. Examples thereof include tert-dodecyl mercaptan, n-dodecyl mercaptan, n-octyl mercaptan, and n-hexyl mercaptan.

The reaction temperature during the emulsion polymerization is not particularly limited but is preferably 0°C to 100°C and more preferably 30°C to 95°C. The reaction time is not particularly limited but is usually 10 minutes to 24 hours, preferably 30 minutes to 12 hours, and most preferably 1 to 6 hours.

When the macromonomer produced by the emulsion polymerization used in the present invention is a macromonomer having a multilayer structure, the types and combination of the polymers constituting the individual layers are not particularly limited and may be any known types and combination. The number of layers is also not limited, and may be two or any number more than two. The polymers constituting the individual layers may be crystalline or amorphous and may be a rubbery polymer or a hard polymer. The combination of the polymers of the individual layers may be selected as desired. From the standpoint of high handling ability of the resulting copolymer, a multilayer structure containing at least one layer of a rubbery polymer and at least one layer of a hard polymer is preferable. A two-layer structure including a core layer composed of a rubbery polymer and a shell layer surrounding the core layer and being composed of a hard polymer is particularly preferable. The terms "rubbery polymer" and "hard polymer" used herein have the same meanings as those commonly used in the field of core-shell polymers.

The main chain skeleton of the polymer constituting each layer of the multilayer structure may be straight or branched or may have a three-dimensional network structure by crosslinking. From the standpoint of imparting an adequate degree of elastic modulus, a three-dimensional network structure formed by crosslinking is preferable.

The macromonomer having the multilayer structure used in the present invention can be obtained by a typical emulsion polymerization technique. For example, a macromonomer having a two-layer structure can be obtained by emulsion-polymerizing a radically polymerizable monomer to form a first layer and then adding another monomer to form a second layer by polymerization. Alternatively, a macromonomer having a two-layer structure can be obtained by copolymerization of a polysiloxane latex having a radically reactive group and a radically polymerizable monomer using a radical initiator. Moreover, the number of layers can be increased by repeating the addition and polymerization of the monomers. An emulsifier, a polymerization initiator, a chain transfer agent, and the like may be added if necessary.

The emulsifier, emulsion initiator, and chain transfer agent used for polymerization of the individual layers of a multilayer macromonomer may be the same among the individual layers or different from one layer to another.

The particle size of the multilayer macromonomer used in the present invention is 20 to 1500 nm, preferably 25 to 1000 nm, and most preferably 30 to 500 nm. When a macromonomer having a particle size within this range is used, the dispersibility of the resulting polyolefin graft copolymer into a thermoplastic resin such as a polyolefin resin or the like can be further enhanced. The average particle size of the macromonomer herein referred to is a volume-average particle size measured by a dynamic light scattering technique using a sample of the macromonomer dispersed in water, with Submicron Particle Sizer Model 370 (produced by NICOMP, laser wave length: 632.8 nm).

When the multilayer macromonomer used in the present invention contains a rubbery polymer and a hard polymer, the polymer constituting the rubbery polymer layer preferably has a glass transition temperature of 20°C or less, more preferably 0°C or less, and most preferably -20°C or less. The polymer constituting the hard polymer layer preferably has a glass transition temperature of 30°C or more, more preferably 50°C or more, and most preferably 80°C or more. As for the glass transition temperature (Tg) of the polymer and the measurement method, the data provided in Polymer Handbook Fourth Edition (John Wiley & Sons Inc) is used for a homopolymer and calculation by the Fox equation, $Tg^{-1}= w_1Tg_1^{-1}+ w_2Tg_2^{-1}$ is conducted for a copolymer based on that data, where $Tg_1$ and $Tg_2$ represent glass transition temperatures of the respective components and $W_1$ and $W_2$ represent weight ratios of the respective components.

The rubbery polymer and the hard polymer may be arranged into a core-shell structure in which the rubbery polymer layer forms the inner layer and the hard polymer layer forms the outer layer or a core-shell structure in which the rubbery polymer layer is the outer layer and the hard polymer layer is the inner layer. A partly covered core-shell structure in which the shell layer covers only part of the core layer or a salami-type structure in which the core particles are dispersed in a shell layer are also possible. From the standpoint of improving the handling ability of the resulting polyolefin graft copolymer, a core-shell structure in which the rubbery polymer layer is the inner layer (core) and the hard polymer layer is the outer layer (shell) is preferred.

The weight ratio of rubbery polymer/hard polymer is preferably 70/30 to 95/5 and more preferably 80/20 to 90/10 from the standpoint of attaining a good balance between the handling ability of the resulting polyolefin graft copolymer and low elastic modulus of the thermoplastic resin composition containing the graft copolymer.

Examples of the polymer that constitutes the rubbery polymer layer include diene rubber, (meth)acrylic rubber, silicone rubber, styrene-diene copolymer rubber, and (meth)acryl-silicone compound rubber. Among these, (meth)acrylic

rubber and silicone rubber are preferable. For the purpose of the present invention, "(meth)acrylic rubber" means a rubbery polymer containing at least 50 wt% of a (meth)acrylic monomer and less than 50 wt% of a monomer copolymerizable with the (meth)acrylic monomer. The amount of the (meth)acrylic monomer constituting the (meth)acrylic rubber is preferably at least 75 wt%, and more preferably at least 90 wt%, whereas the amount of the monomer copolymerizable with the (meth)acrylic monomer is preferably less than 25 wt% and more preferably 10 wt%. For the purpose of the present invention, "silicon rubber" means a rubbery polymer containing at least 50 wt% of an organosiloxane and less than 50 wt% of a monomer copolymerizable with the organosiloxane. The amount of the organosiloxane constituting the silicone rubber is preferably at least 75 wt% and more preferably at least 90 wt%. The amount of the monomer copolymerizable with the organosiloxane is preferably less than 25 wt% and more preferably 10 wt%.

A rubbery polymer core-hard polymer shell structure, which is a preferable example of the multilayer macromonomer, will now be described.

The (meth)acrylic rubber, which is a preferable example of the polymer constituting the rubbery polymer core, is preferably a (meth)acrylic rubber obtained by copolymerization of (D) a (meth)acrylic monomer (referred to as "compound (D)" hereinafter) and (E) a monomer (referred to as "compound (E)" hereinafter) having at least two radically polymerizable unsaturated groups per molecule. The (meth)acrylic rubber may further contain (F) (referred to as "compound (F)" hereinafter) a monomer copolymerizable with the compound (D) and/or the compound (E). The amounts of the respective components are not particularly limited and may be any amount. The amount of the compound (D) is preferably 50 to 99.99 wt% and more preferably 75 to 99.9 wt%. In the case where the polyolefin graft copolymer is added to a polyolefin resin, the increase in elastic modulus can be more easily inhibited as the amount of the compound (D) increases. The amount of the compound (E) is preferably 0.01 to 25 wt% and more preferably 0.1 to 10 wt%. When the amount is in this range, a good balance is achieved between the grafting efficiency and low elastic modulus of the rubbery polymer and the hard polymer. The amount of the compound (F) is preferably 0 to 50 wt% and more preferably 0 to 25 wt%. The total amount of the compound (D), the compound (E) and the compound (F) is 100 wt%.

The compound (D) is a component for forming the main skeleton of the (meth)acrylic rubber. Examples of the compound (D) include, but are not limited to, (meth)acrylates such as methyl acrylate, ethyl acrylate, propyl acrylate, n-butyl acrylate, 2-ethylhexyl acrylate, 2-ethylhexyl methacrylate, and lauryl methacrylate. A (meth)acrylic monomer that forms a hard polymer in case of homopolymerization, such as tert-butyl acrylate, hexadecyl acrylate, phenyl acrylate, methyl methacrylate, ethyl methacrylate, benzyl methacrylate, glycidyl methacrylate, 2-hydroxyethyl methacrylate, acrylic acid, or methacrylic acid, can be used as long as the amount thereof is controlled to give a rubbery polymer by copolymerization with other components (D), (E), and (F). Among these, alkyl (meth)acrylate having a $C_2$-$C_{18}$ alkyl group is preferred and n-butyl acrylate is more preferred from the standpoint of availability and economic efficiency of the resulting (meth)acrylic rubber. These compounds (D) may be used alone or in combination.

The compound (E) is a component that enables graft copolymerization of the rubbery polymer which forms the core and the hard polymer which forms the shell. In part of the compound (E), only one of the radically polymerizable unsaturated groups in a molecule is copolymerized with the compound (D) and the compound (F) to introduce an unreacted radically copolymerizable unsaturated group into the (meth)acrylic rubber and to thereby enable copolymerization with the hard polymer. For the rest of the compound (E), the radically polymerizable unsaturated groups in the molecule react to introduce a crosslinked structure in the (meth)acrylic rubber.

Examples of the compound (E) include allyl methacrylate, allyl acrylate, diallyl phthalate, triallyl cyanurate, triallyl isocyanurate, and ethylene glycol diacrylate. These compounds (E) may be used alone or in combination. Among these, allyl methacrylate is preferable for its good graft efficiency with a polyolefinic monomer.

The compound (F) is a component for adjusting various properties, e.g., elastic modulus, Tg, and index of refraction, of the (meth)acrylic rubber. Any monomer copolymerizable with the compound (D) and/or the compound (E) can be used as the compound (F) without particular limitation, either alone or in combination. Examples of the compound (F) include, but are not limited to, styrene, $\alpha$-methylstyrene, 1-vinylnaphthalene, 2-vinylnaphthalene, 1,3-butadiene, isoprene, chloroprene, acrylonitrile, methacrylonitrile, vinyl acetate, and vinyl ethyl ether.

The (meth)acrylic rubber is synthesized by radical (co)polymerization with typical emulsion polymerization method and can be obtained as a latex.

During the emulsion polymerization, all of the starting materials may be fed once, or the starting materials may be continuously or intermittently added in fractions after feeding some of the starting materials. A process of adding the emulsion of the compound (D), the compound (E), the compound (F), or a mixture thereof prepared in advance using an emulsifier and water or a process of separately adding an emulsifier or an aqueous solution of an emulsifier either continuously or in fractions to the compound (D), the compound (E), the compound (F), or a mixture thereof can be employed.

The amount of water used for emulsion polymerization is not particularly limited and may be any amount sufficient for emulsification of the compound (D), the compound (E), and the compound (F). Typically, the amount of water is 1 to 20 times the total amount of the compound (D), the compound (E), and the compound (F).

Examples of the emulsifier, the initiator, and the chain transfer agent for emulsion polymerization are the same

as those listed as the preferable examples for the process of producing the (meth)acryl macromonomer described above.

Silicone rubber, which is another preferable example of the polymer constituting the rubbery polymer, is preferably silicone rubber obtained by reacting an organosiloxane (referred to as "compound (G)" hereinafter) with a monomer (referred to as "compound (H)" hereinafter) having a functional group reactive to the compound (G) and a radically polymerizable unsaturated group in a molecule. The silicone rubber may further contain a compound (referred to as "compound (I)" hereinafter) having a functional group reactive with the compound (G) and/or the compound (H), if necessary. The amounts of the respective components are not particularly limited and may be any. The amount of the compound (G) is preferably 50 to 99.99 wt% and more preferably 75 to 99.90 wt%. As the amount increases, the copolymer obtained exhibits superior characteristics derived from the use of silicone material, such as improved releasability from molds, formability, gas permeability, water repellency, weather resistance, surface lubricity, softness, low-temperature brittleness, etc. The amount of the compound (H) is preferably 0.01 to 25 wt% and more preferably 0.1 to 10 wt%. When the amount used is within this range, the grafting efficiency of the rubbery polymer and the hard polymer is particularly favorable. When the compound (I) is used, the amount thereof is preferably 0 to 50 wt% and more preferably 0 to 25 wt%. The total amount of the compound (G), the compound (H) and the compound (I) is 100 wt%.

The compound (G) is a component for forming the main skeleton of the silicone rubber. Any emulsion-polymerizable liquid can be used as the compound (G) irrespective of the molecular weight. However, the molecular weight is preferably 1000 or less and more preferably 500 or less. The compound (G) may be linear, cyclic, or branched. From the economy of the emulsion polymerization system, a cyclic siloxane is preferable. Examples of the cyclic siloxane include hexamethylcyclotrisiloxane, octamethylcyclotetrasiloxane, decamethylcyclopentasiloxane, dodecamethylcyclohexasiloxane, tetramethyltetraphenylcyclotetrasiloxane, octaphenylcyclotetrasiloxane, and 1,2,3,4-tetrahydro-1,2,3,4-tetramethylcyclotetrasiloxane. A bifunctional alkoxysilane may also be used as the compound (G). Examples thereof include dimethoxydimethylsilane and diethoxydimethylsilane. Further, a cyclic siloxane and a bifunctional alkoxysilane may also be used in combination. These compounds (G) may be used alone or in combination. The compound (H) reacts with the compound (G) through its functional group. As a result, a radically polymerizable unsaturated group can be introduced into the side chain or end of the resulting silicone rubber. The radically polymerizable unsaturated group is a component that enables graft copolymerization of the silicone rubber with the hard polymer shell. The group used for reaction with the compound (G) is preferably a hydrolyzable alkoxy group bonded to a silicon atom or silanol group, or a group having a cyclic siloxane structure that can undergo open-ring copolymerization with the compound (G). Examples of the compound (H) include alkoxysilane compounds such as 3-(meth)acryloxypropylmethyldimethoxysilane, 3-(meth)acryloxypropyltrimethoxysilane, 3-(meth)acryloxypropylmethyldiethoxysilane, and 3-(meth)acryloxypropyltriethoxysilane; and organosiloxanes such as 1,3,5,7-tetrakis((meth)acryloxypropyl)-1,3,5,7-tetramethylcyclotetrasiloxane, and 1,3,5-tris((meth)acryloxypropyl)-1,3,5-trimethylcyclotrisiloxane. Of these, 3-(meth)acryloxypropylmethyldimethoxysilane is particularly preferable for its good reactivity. These compound (H) may be used alone or in combination.

The compound (I) reacts with the compound (G) and/or the compound (H) and is a component for adjusting the properties of the silicone rubber. For example, by using a polyfunctional silane compound having at least three hydrolyzable groups bonded to the silicon atom or a partial hydrolytic condensate thereof, a crosslinking structure can be introduced into the silicone rubber to adjust Tg, elastic modulus, and the like. Examples of the polyfunctional silane compound include alkoxysilanes such as methyltrimethoxysilane, ethyltrimethoxysilane, methyltri(methoxyethoxy)silane, tetramethoxysilane, tetraethoxysilane, methyltriethoxysilane, and ethyltriethoxysilane and partial hydrolytic condensates thereof; and acetoxysilanes such as methyltriacetoxysilane, ethyltriacetoxysilane, and tetraacetoxysilane, and partial hydrolytic condensates thereof. These compound (I) may be used alone or in combination.

The silicone rubber can be produced by a typical polymerization technique under acidic or basic conditions. For example, the silicone rubber can be produced by emulsifying the compound (G), the compound (H), and the optional compound (I) with an emulsifier and water in a homomixer, a colloid mill, a homogenizer, or the like, adjusting the pH of the system to 2 to 4 with alkylbenzenesulfonic acid and sulfuric acid, heating the resulting mixture to conduct polymerization, and neutralizing the system with an alkali component such as sodium hydroxide, potassium hydroxide, or the like.

All of the starting materials may be added in one step and the mixture may be stirred for a predetermined time before the pH is reduced. Alternatively, part of the starting materials may be fed, and the rest of the starting materials may be added stepwise to the emulsion with a reduced pH. When the materials are added stepwise, they may be added directly or in the form of an emulsion with water and an emulsifier. Preferably, the materials added are in the form of emulsion from the standpoint of the polymerization rate. The reaction temperature and the reaction time are not particularly limited. From the standpoint of easiness in the reaction control, the reaction temperature is preferably 0°C to 100°C and more preferably 50°C to 95°C. The reaction time is preferably 1 to 100 hours and more preferably 5 to 50 hours.

In conducting polymerization under acidic conditions, Si-O-Si bonds that form the polyorganosiloxane skeleton are in an equilibrium state of bond cleavage and formation. This equilibrium changes with temperature, and as the temperature is decreased, there is a tendency that a polyorganosiloxane with a higher molecular weight is formed. Thus,

in order to obtain a high-molecular weight polyorganosiloxane, it is preferable to polymerize the compound (G) by heating and then age the resulting product by cooling the product to a temperature not more than the polymerization temperature. For example, the polymerization is conducted at 50°C or more and the heating is terminated when the polymerization conversion rate reaches 75% to 90% and preferably 82% to 89%, followed by 5 to 100 hours of aging by cooling the system to 10°C to 50°C, preferably 20°C to 45°C. Note that "polymerization conversion rate" referred herein means the conversion rate with respect to conversion of the compound (G), the compound (H), and the optional compound (I) into lower volatility components.

The amount of water used for emulsion polymerization is not particularly limited and may be any amount sufficient for emulsifying and dispersing the compound (G), the compound (H) and the compound (I). In general, the amount of water by weight is 1 to 20 times the total amount of the compound (G), the compound (H) and the compound (I).

The emulsifier used in the emulsion polymerization may be any known emulsifier that does not lose the emulsifying ability in the pH region of the reaction. Examples of such an emulsifier include alkylbenzenesulfonic acid, sodium alkylbenzene sulfonate, sodium alkyl sulfate, sodium alkyl sulfosuccinate, and sodium polyoxyethylene nonylphenyl ether sulfonate. The amount of the emulsifier is not particularly limited and may be adequately adjusted according to the particle size of the target silicone rubber and the like. The amount of the emulsifier is preferably 0.05 to 20 wt% and more preferably 0.1 to 10 wt% of the emulsion so as to achieve sufficient emulsifying ability and to prevent the properties of the resulting silicone rubber and the resulting polyolefin graft copolymer from being adversely affected. The particle size of the silicone rubber can be controlled by a general emulsion polymerization technique such as increasing or decreasing the amount of the emulsifier. The particle size of the silicone rubber is preferably 20 to 1500 nm, more preferably 25 to 1000 nm, and most preferably 30 to 500 nm so that the dispersibility of the polyolefin graft copolymer obtained by copolymerization in a thermoplastic resin such as polyolefin resin or the like is satisfactory.

Examples of the polymer constituting the hard polymer shell include polyvinyl cyanide, aromatic polyvinyl, polyalkyl (meth)acrylate, and maleimide polymers. Among these, polyalkyl (meth)acrylate is preferable.

Polyalkyl (meth)acrylate, which is a preferable example of the polymer constituting the hard polymer, is preferably a hard polymer obtained by copolymerization of (J) a (meth)acrylic monomer (referred to as "compound (J)" hereinafter) and (K) a monomer having at least one radically polymerizable unsaturated group and at least one group copolymerizable with an olefinic monomer in a molecule (referred to as "compound (K)" hereinafter). The hard polymer may further contain (L) a monomer copolymerizable with the compound (J) and/or the compound (J), as necessary. The amounts of the respective components are not particularly limited and may be any amount. The amount of the compound (J) is preferably 50 to 99.99 wt% and more preferably 75 to 99.9 wt%. The handling ability of the resulting macromonomer and the copolymer after grafting of an olefin is improved as the amount of the compound (J) is increased. The amount of the compound (K) is preferably 0.01 to 25 wt% and more preferably 0.1 to 10 wt%. When the amount used is in this range, the grafting efficiency with the olefinic monomer and the handling ability are particularly satisfactory. The amount of the compound (L) is preferably 0 to 50 wt% and more preferably 0 to 25 wt%. The total amount of the compound (J), the compound (K), and the compound (L) is 100 wt%.

The compound (J) forms the main skeleton of the polyalkyl (meth)acrylate and is a component for improving the handling ability of the macromonomer and the copolymer after grafting of the olefin. Examples of the compound (J) include, but are not limited to, (meth)acrylates such as tert-butyl acrylate, hexadecyl acrylate, phenyl acrylate, methyl methacrylate, ethyl methacrylate, benzyl methacrylate, glycidyl methacrylate, and 2-hydroxyethyl methacrylate; and (meth)acrylic acid such as acrylic acid and methacrylic acid, acid anhydrides thereof and metal salts thereof. Among these, an alkyl (meth)acrylate having a $C_2$-$C_{18}$ alkyl group is preferred for its availability of the resulting hard polymer and economy. Tert-butyl acrylate, methyl methacrylate, and glycidyl methacrylate are particularly preferable. These compounds (J) may be used alone or in combination. A monomer that forms a rubbery polymer by homopolymerization, such as methyl acrylate, ethyl acrylate, propyl acrylate, n-butyl acrylate, 2-ethylhexyl acrylate, 2-ethylhexyl methacrylate, or lauryl methacrylate, can be used as long as the amount thereof is controlled to give a hard polymer by copolymerization with the other components (J), (K), and (L).

The compound (K), which forms a copolymer with the component (J) and in some cases with the component (L) through its radically polymerizable unsaturated group and thereby introduces a group copolymerizable with the olefinic monomer into the multilayer macromonomer, is a component for enabling graft copolymerization of the copolymer with the olefinic monomer. The group copolymerizable with the olefinic monomer may be any functional group but is preferably allyl-terminated, cyclic olefin-terminated, styryl-terminated, or (meth)acryl-terminated from the standpoint of high reactivity in coordination polymerization. In particular, (meth)acryl-terminated, allyl-terminated, and dicyclopentenyl-terminated functional groups are preferable.

When the group copolymerizable with the olefinic monomer has both radical polymerizability and coordination polymerizability, the radically polymerizable unsaturated group and the group copolymerizable with the olefinic monomer in the compound (K) may be the same group or different from each other. When they are the same, the component (K) has two or more radically polymerizable unsaturated groups (which are also copolymerizable with the olefinic monomer) per molecule. However, during the synthesis of the (meth)acryl hard shell, the reaction can be controlled by terminating

the reaction when the radically polymerizable unsaturated groups proceed with the radical polymerization reaction to a certain extent that unreacted radically polymerizable unsaturated groups (which are also copolymerizable with the olefinic monomer) can remain in the resulting macromonomer.

Examples of the compound (K) include allyl methacrylate, allyl acrylate, diallyl phthalate, triallyl cyanurate, triallyl isocyanurate, ethylene glycol diacrylate, and ethylene glycol dicyclopentenyl ether methacrylate. These compounds (K) may be used alone or in combination. Among these, allyl methacrylate and ethylene glycol dicyclopentenyl ether methacrylate are preferable for their high graft efficiency with the polyolefinic monomer.

The compound (L) is a component for adjusting various physical properties, e.g., elastic modulus, Tg, and.index of refraction, of the poly(meth)acryl hard shell. Preferable examples thereof are the same as those listed for the compound (F) in the above-described (meth)acrylic rubber.

The polyalkyl (meth)acrylate can be produced by the same method as in the above-described (meth)acrylic rubber. A multilayer macromonomer can be obtained by mixing a latex of a rubbery polymer, the compound (J), the compound (K), the compound (L) (if necessary), a polymerization initiator, an emulsifier, and a chain transfer agent, followed by polymerization.

The polymerization initiator, emulsifier, chain transfer agent, etc., used for emulsion polymerization may be any of those known. Preferable examples thereof are the same as those listed for the above-described process of producing the (meth)acrylic rubber.

Next, the catalyst for producing the polyolefin graft copolymer of the present invention is described.

In the present invention, a coordination polymerization catalyst is used as a catalyst for producing the polyolefin graft copolymer. "Coordination polymerization catalyst" is defined as a catalyst that promotes coordination polymerization. The coordination polymerization catalyst used in the present invention is not particularly limited and may be any coordination polymerization catalyst that exhibits olefin polymerization activity in the presence of water and a polar compound. Preferable examples thereof include, but are not limited to, those disclosed in Chemical Review 2000, vol. 100, pp. 1169-1203; Chemical Review 2003, vol. 103, pp. 283-315; Journal of Synthetic Organic Chemistry, Japan, 2000, vol. 58, p. 293; Angewandte Chemie International Edition, 2002, vol. 41, pp. 544-561; Chem. Commun., 2000, p. 301; Macromol. Symp., 2000, vol. 150, p. 53; Macromolecules, 2003, vol. 36, pp. 6711-6715; Macromolecules, 2001, vol. 34, p. 1165; WO97/17380; and WO97/48740. Among these, a complex containing a ligand having two imine nitrogen atoms and a late transition metal selected from Groups 8 to 10 in the periodic table is preferable for its ease of synthesis. In particular, a complex containing α-diimine ligand and a late transition metal selected from the Group 10 in the periodic table is preferred, and a species (active species) represented by following general formula (1) or (2) is particularly preferable for use after reaction with a co-catalyst:

[Chem. 1]

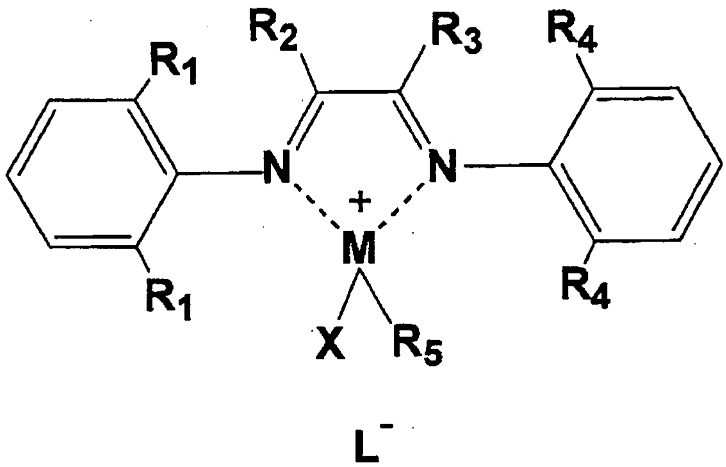

(1)

(wherein M is palladium or nickel; $R_1$ and $R_4$ are each independently a $C_1$-$C_4$ hydrocarbon group; $R_2$ and $R_3$ are each independently a hydrogen atom or a methyl group; $R_5$ is a halogen atom, a hydrogen atom, or a $C_1$-$C_{20}$ organic group; X is an organic group having a heteroatom that can coordinate to M and may be bonded to $R_5$; X may be absent;

and $L^-$ is any anion) ;

[Chem. 2]

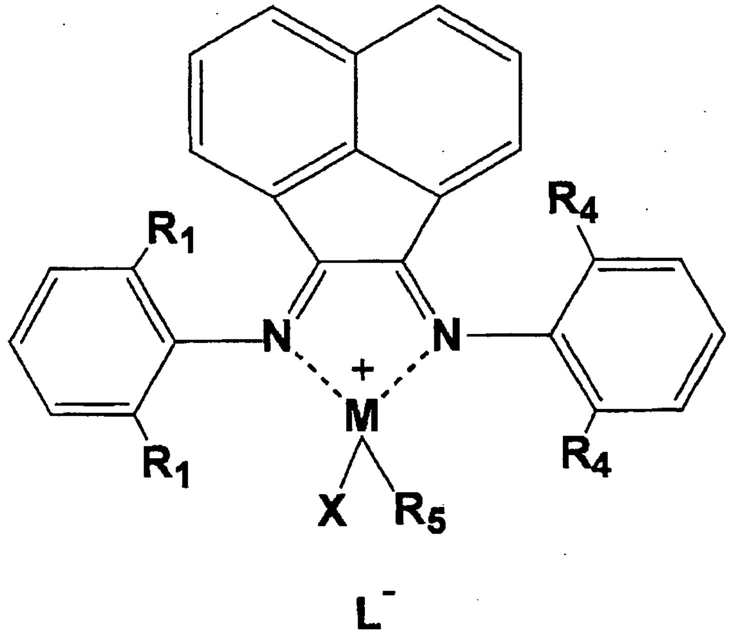

(2)

(wherein M is palladium or nickel; $R_1$ and $R_4$ are each independently a $C_1$-$C_4$ hydrocarbon group; $R_5$ is a halogen atom, a hydrogen atom, or a $C_1$-$C_{20}$ organic group; X is an organic group having a heteroatom that can coordinate to M and may be bonded to $R_5$; X may be absent; and $L^-$ is any anion). As the $C_1$-$C_4$ hydrocarbon group represented by $R_1$ or $R_4$, a methyl group, an ethyl group, an isopropyl group, a tert-butyl group, an n-butyl group, and the like are preferred. A methyl group and an isopropyl group are more preferable.

Examples of the molecule X that can coordinate to M include polar compounds such as diethylether, acetone, methyl ethyl ketone, acetaldehyde, acetic acid, ethyl acetate, water, ethanol, acetonitrile, tetrahydrofuran, dimethylformamide, dimethylsulfoxide, and propylene carbonate. However, the molecule X may be absent. When $R_5$ has a heteroatom, in particular, a carbonyl oxygen of an ester bond or the like, the carbonyl oxygen instead of X may be coordinated to M. During polymerization with an olefin, it is known that the olefin coordinates to M.

The pairing anion represented by $L^-$ is formed along with cation ($M^+$) as a result of the reaction between a catalyst containing a transition metal with an $\alpha$-diimine ligand and a co-catalyst. The pairing anion may be any as long as it can form a non-coordinating ion pair in the solvent.

The $\alpha$-diimine ligand having aromatic groups on both imine nitrogen atoms, i.e., a compound represented by $ArN=C(R_2)C(R_3)=NAr$, is preferred since the synthesis thereof is simple and activity thereof is high. $R_2$ and $R_3$ are each preferably a hydrocarbon group and more preferably a hydrogen atom or a methyl group or a group having an acenaphthene skeleton as shown in general formula (2) due to ease of synthesis and high activity. Furthermore, an $\alpha$-diimine ligand having substituted aromatic groups on both imine nitrogen atoms is preferably used for the steric factor and the tendency yielding a polymer with a higher molecular weight. Thus, Ar is preferably a substituted aromatic group such as 2,6-dimethylphenyl and 2,6-diisopropylphenyl.

The auxiliary ligand ($R_5$) in the active species obtained from the late transition metal complex of the present invention is preferably a hydrocarbon group, a halogen group, or a hydrogen group. This is because it is necessary that while the cation ($Q^+$) of the co-catalyst described below abstracts halogen or the like from a metal-halogen bond, a metal-hydrogen bond, or a hydrogen-carbon bond of the catalyst to thereby generate a salt, a cation ($M^+$) which is an active species that has a metal-carbon bond, a metal-halogen bond, or a metal-hydrogen bond is generated from the catalyst and form a non-coordinating ion pair with the anion ($L^-$) of the co-catalyst. Examples of $R_5$ include a methyl group, a chloro group, a bromo group, and a hydrogen group. Of these, a methyl group and a chloro group are preferable

for their ease of synthesis. It should noted that since olefin insertion to the $M^+$-carbon bond (or hydrogen bond) is favored over olefin insertion to the $M^+$-halogen bond, a particularly preferable $R_5$ as the auxiliary ligand of the catalyst is a methyl group.

$R_5$ may be an organic group having an ester bond having a carbonyl oxygen that can coordinate to M. Examples thereof include a group obtained from methyl butyrate.

The co-catalyst can be expressed as $Q+L^-$. Examples of Q include Ag, Li, Na, K, and H. Ag is preferred since abstraction reaction of halogen is readily completed, and Na and K are also preferred since they are inexpensive. Examples of L include $BF_4$, $B(C_6F_5)4$, $B(C_6H_3(CF_3)_2)4$, PF6, AsF6, SbF6, $(RfSO_2)_2CH$, $(RfSO_2)_3C$, $(RfSO_2)_2N$, and $RfSO_3$. In particular, PF6, AsF6, SbF6, $(RfSO_2)_2CH$, $(RfSO_2)_3C$, $(RfSO_2)_2N$, and $RfSO_3$ that are stable for polar compounds are preferable. PF6, AsF6, and $SbF_6$ are easy to synthesize and widely industrially available and thus are particularly preferable. From the standpoint of high activity, BF4, $B(C_6F_5)4$, and $B(C_6H_3(CF_3)_2)_4$, in particular, $B(C_6F_5)$ 4 and $B(C_6H_3(CF_3)_2)_4$, are preferable. Rf is a hydrocarbon group containing a plurality of fluorine groups. Fluorine is needed to render the anion non-coordinating. Thus, the number of fluorine atoms is preferably as large as possible. Examples of Rf include, but are not limited to, $CF_3$, $C_2F_5$, $C_4F_9$, $C_8F_{17}$, and $C_6F_5$. Furthermore, some of these may be used in combination.

For the above-described reason of activation, the molar ratio of late transition metal complex catalyst/co-catalyst is 1 /0.1 to 1/10, preferably, 1/0.5 to 1/2, and more preferably 1/0.75 to 1/1.25.

The olefinic monomer used in the present invention is an olefin compound having a coordination polymerizable carbon-carbon double bond.

Preferred examples of the olefinic monomer include $C_2$-$C_{20}$ olefins such as ethylene, propylene, 1-butene, 1-hexene, 1-octene, 1-decene, 1-hexadecene, 1-eicosene, 4-methyl-1-pentene, 3-methyl-1-butene, vinylcyclohexane, cyclopentene, cyclohexene, cyclooctene, norbornene, and 5-phenyl-2-norbornene. Of these, $\alpha$-olefins (olefin compounds having carbon-carbon double bonds at the ends), in particular, $\alpha$-olefins having not more than 10 carbon atoms, are particularly preferable for their high polymerization activity. Examples thereof include ethylene, propylene, 1-butene, 1-hexene, and 1-octene. These olefinic monomers may be used alone or in combination.

In addition, a small amount of a diene, such as 1,3-butadiene, isoprene, 1,4-hexadiene, 3,5-dimethyl-1,5-hexadiene, 1,13-tetradecadiene, 1,5-cyclooctadiene, norbornadiene, 5-vinyl-2-norbornene, ethylidenenorbornene, 5-phenyl-2-norbornene, dimethanooctahydronaphthalene, or dicyclopentadiene may be used. The amount of the diene is preferably 0 to 10 parts by weight and more preferably 0.1 to 2 parts by weight per 100 parts by weight of the olefinic monomer. The amount of the olefinic monomer is not particularly limited. From the standpoint that a polymer with a high molecular weight can be obtained in high yield, the molar ratio of the olefinic monomer/active species is preferably 10 to $10^9$, more preferably 100 to $10^7$, and most preferably 1000 to $10^5$.

The process of producing the graft copolymer of the present invention will now be described as follows.

The polyolefin graft copolymer of the present invention is produced by dispersing a coordination polymerization catalyst in a latex of a macromonomer prepared by radical emulsion polymerization with a particular initiator system such that the copolymerization with the olefinic monomer can be conducted under conditions similar to emulsion polymerization. If necessary, additives, such as an emulsifier and an organic solvent, may be added. The order and method of charging the individual starting materials are not particularly limited. From the standpoint of ease of controlling the reaction, it is preferable to add the olefinic monomer after the coordination polymerization catalyst, the solvent, the emulsifier, and the like are added to and dispersed in the macromonomer latex. When the olefinic monomer used is gaseous at the reaction temperature, the olefinic monomer may be fed as gas or as a liquid or solid by condensing or solidifying the olefinic monomer at low temperature, followed by heating the system to the reaction temperature. All the macromonomer latex, the olefinic monomer, and the coordination polymerization catalyst may be fed into the reactor in one step, or, they may be added continuously or intermittently in fractions after feeding part of them. The macromonomer latex, the olefinic monomer, and the coordination polymerization catalyst may be fed all at once without any treatment or may be fed as an emulsified liquid by mixing them with water and an emulsifier.

The ratio of the olefinic monomer to the macromonomer may be desirably set. The amount of the olefinic monomer is preferably 1 to 100 parts by weight and more preferably 2 to 33 parts by weight per 100 parts by weight of the macromonomer used. When the olefinic monomer is a volatile liquid having a boiling point of 100°C or less or gas, the olefinic monomer can be used in large excess, and the reaction can be terminated when the above-described desirable amount is polymerized, followed by the removal of unreacted monomers by heating or depressurization.

In order to increase solubility of the olefinic monomer and the coordination polymerization catalyst and to accelerate reaction during the polymerization, a small amount of an organic solvent may be added. The solvent is not particularly limited but is preferably an optionally halogenated aliphatic or aromatic solvent. Examples thereof include toluene, ethylbenzene, xylene, chlorobenzene, dichlorobenzene, pentane, hexane, heptane, cyclohexane, methylcyclohexane, ethylcyclohexane, butyl chloride, methylene chloride, and chloroform. The solvent may also be a polar solvent such as tetrahydrofuran, dioxane, diethyl ether, acetone, ethanol, methanol, methyl ethyl ketone, methyl isobutyl ketone, or ethyl acetate. A solvent that has low water solubility, that can be relatively easily impregnated in the macromonomer

used, and that can highly dissolve the catalyst is particularly preferable. Examples of such a solvent include methylene chloride, chloroform, chlorobenzene, and butyl chloride.

These solvents may be used alone or in combination. The total amount of the solvents used is preferably 30 vol% or less and more preferably 10 vol% or less of the entire volume of the reaction solution, or the amount of the solvents is preferably 150 parts by weight or less or more preferably 50 parts by weight or less per 100 parts by weight of the macromonomer used. From the standpoint of further increasing the reaction rate, the amount of the solvent used is preferably as large as possible. From the standpoint of ease of maintaining a homogeneous system, the amount of the solvent used is preferably as small as possible.

The reaction temperature, pressure, and time for production of the graft copolymer of the present invention may be adequately selected according to the boiling point of the starting material and the reaction rate. Although no particular limitation is imposed, from the standpoint of controllability of the reaction and reduction of the production cost, the reaction temperature is preferably 0°C to 100°C, more preferably 10°C to 95°C, and most preferably 20°C to 95°C; the reaction pressure is preferably 0.05 to 10 MPa and more preferably 0.1 to 3 MPa; and the reaction time is preferably 10 minutes to 100 hours and more preferably 0.5 to 50 hours. The temperature and the pressure may be kept constant from the initiation to the termination of the reaction or may be changed continuously or stepwise during the reaction. When the olefinic monomer used is gaseous, the pressure would gradually decrease as the olefinic monomer is consumed by the polymerization reaction. In such a case, the reaction may be conducted while leaving the pressure as it is changed or while feeding the olefinic monomer according to the amount of consumption or heating such that the pressure can be maintained at a constant level. The polyolefin graft copolymer obtained by the present invention is normally obtained as a latex. The particle size of the latex depends on the particle size of the raw material macromonomer and the amount of the olefinic monomer reacted therewith. From the standpoint of high dispersibility in a thermoplastic resin such as a polyolefin resin, it is preferable to select conditions that will give a particle size of 20 to 1500 nm, more preferably 25 to 1000 nm, and most preferably 30 to 500 nm. Under particular reaction conditions, some of the latex particles may aggregate to form precipitates or a free polyolefin may be precipitated as a by-product. It is preferable to conduct reaction under conditions that do not produce such precipitates.

The resulting latex containing the polyolefin graft copolymer of the present invention may be used as it is without any treatment or may be combined with an additive or blended with another latex or undergo treatment such as dilution, concentration, heating, degassing, and the like before use. The latex may be coated on a substrate such as a plastic, metal, wood, or glass substrate so that the latex can be used as a coating material, a paint, or a finishing agent, or may be impregnated in fibers, paper, cloth, carbon fibers, glass wool, or the like so that the latex can be used as a modifier, a curing agent, or the like. The latex may be used as a material of fiber-reinforced plastic or cast films.

The polyolefin graft copolymer of the present invention may be used in various applications by dehydrating the polyolefin graft copolymer latex and thereby recovering the solid component. Examples of the process for recovering the solid component from the latex include, but are not limited to, a process (salting out) of adding an electrolyte, such as calcium chloride, magnesium chloride, calcium sulfate, magnesium sulfate, aluminum sulfate, calcium formate or the like to cause aggregation; a process of mixing the latex with a hydrophilic organic solvent such as methanol to cause aggregation; a process of mechanical operation, such as ultrasonic treatment, high-speed agitation, centrifugal separation for causing aggregation of the solid component, and a process of removing water by drying, such as spray drying, heat drying, freeze drying, or vacuum drying. Washing with water and/or an organic solvent may be conducted in any stage of a series of steps for recovering the polyolefin graft copolymer of the present invention from the latex.

The polyolefin graft copolymer of the present invention can be recovered as powder or a mass by aggregation of the latex solid component or by drying to remove water. The resulting dry product may be processed into pellets with an extruder, such as a Banbury mixer or the like. Alternatively, a water-containing (or solvent-containing) resin prepared by dehydrating (solvent removal) the flocculant may be processed into pellets through a pressure dehydrator. From the standpoint of high handling ability, the copolymer is preferably recovered as powder.

The polyolefin graft copolymer of the present invention may be blended into any of a variety of thermoplastic resins to produce a thermoplastic resin composition of the present invention.

Preferable examples of the thermoplastic resin are widely used resins, e.g., polyolefins such as polypropylene, polyethylene, ethylene-propylene rubber, ethylene-propylene-diene rubber, ethylene-octene rubber, polymethylpentene, an ethylene-cyclic olefin copolymer, an ethylene-vinyl acetate copolymer, an ethylene-glycidyl methacrylate copolymer, and an ethylene-methyl methacrylate copolymer; vinyl polymers such as polyvinyl chloride, polystyrene, polymethyl methacrylate, a methyl methacrylate-styrene copolymer, a styrene-acrylonitrile copolymer, a styrene-acrylonitrile-N-phenylmaleimide copolymer, and an $\alpha$-methylstyrene-acrylonitrile copolymer; and engineering plastics such as polyester, polycarbonate, polyamide, a polyphenylene ether-polystyrene composite, polyacetal, polyether ether ketone, and polyether sulfone. These thermoplastic resins may be used alone or in combination. Among these, polyolefins such as polyethylene and polypropylene are preferable because of the good dispersibility of the polyolefin graft copolymer of the present invention.

The ratio for blending the thermoplastic resin and the graft copolymer may be adequately determined so that

a good balance among properties of the molded product can be achieved. In order to yield sufficient properties, the amount of the graft copolymer is 0.1 part or more and more preferably 5 parts or more per 100 parts of the thermoplastic resin. In order to maintain the properties of the thermoplastic resin, the amount of the graft copolymer is preferably 500 parts or less and more preferably 100 parts or less per 100 parts of the thermoplastic resin.

Since the polyolefin graft copolymer of the present invention contains a polyolefin component, the polyolefin graft copolymer shows good dispersibility in a low-polarity resin such as polyethylene or polypropylene while imparting various functions derived from the functional group contained in the macromonomer.

EXAMPLES

The present invention will be described in further detail based on Examples below. It should be noted that the present invention is not in any way limited by the examples below. The properties and characteristics of SYNTHETIC EXAMPLES, EXAMPLES, and COMPARATIVE EXAMPLES below were analyzed by the following methods.

[Ethylene consumption]

The amount of ethylene consumed by the reaction was calculated using a state equation pV = nZRT for gas at high temperature and high pressure, wherein p = pressure, V = volume, n = number of moles, Z = constant, R = state constant for gas, and T = temperature. Based on Table 8.8 of Kagaku Binran (Chemical Handbook), revised fourth edition, Kiso-hen (Basic) II, p. 110, the amount was approximated for Z = -0.0666p + 1.0048 when T = 300 (K). The volume V of the gas phase portion was determined by the difference between the capacity of the reactor and the volume of the reaction solution charged. The ethylene consumption $\Delta n$ (mol) when the inner pressure was decreased from p1 (MPa) to p2 (MPa) was calculated by $\Delta n = p1 \times V/(-0.0666p1 + 1.0048)/(RT) - p2 \times V/(-0.0666p + 1.0048)/(RT)$. The accumulation of $\Delta n$ determined from the change in inner pressure from the initiation to the termination of the reaction was assumed as the total amount of reacted ethylene.

[Average particle size]

The particle size (diameter) was measured by a dynamic light scattering method with Submicron Particle Sizer Model 370 produced by NICOMP, and the volume average particle size was determined therefrom. A sample of the latex diluted with deionized water was used as a measurement sample.

[Polymerization conversion]

The total weight of the monomer, the macromonomer, the emulsifier, and the initiator charged for emulsion polymerization was divided by the total weight of the reaction solution to determine the maximum solid concentration when 100% of the monomer was polymerized. Into an ointment jar, about 0.5 to 2 g of the latex obtained as a result of the reaction was placed and heat-dried in an oven at 100°C to determine the ratio of the residual solid content, which was assumed to be the solid concentration in the latex. The duration of the heat drying was until the change in weight became 1% or less after 30 minutes of further heating (typically 30 minutes to 2 hours). The polymerization conversion was calculated based on the equation below:

$$\text{polymerization conversion (wt\%)} = \{(\text{solid concentration in latex})/(\text{maximum solid concentration})\} \times 100.$$

(EXAMPLE 1) Synthesis of macromonomer having two-layer structure

To a 200 mL four-neck flask equipped with a stirrer, a thermometer, a reflux condenser tube, and a dropping funnel, 60 mL of water, 1.5 g of butyl acrylate, 0.3 g of allyl methacrylate, and 60 mg of sodium dodecylsulfate were charged. The resulting mixture was bubbled with nitrogen, and stirring was initiated to emulsify the mixture. The mixture was heated to 50°C under a nitrogen stream, and 0.3 mL of a 10 wt% sodium formaldehyde sulfoxylate aqueous solution, 0.4 mL of an aqueous solution of 0.8 mg of iron sulfate and 0.8 mg of citric acid, and 30 mg of cumene hydroperoxide were added. Immediately thereafter, a mixed solution of 13.5 g of butyl acrylate and 0.27 g of allyl methacrylate was added dropwise through the dropping funnel over 10 minutes to initiate polymerization of the first layer. After the increase in inner temperature due to the reaction heat stopped and the temperature of the solution returned to a temperature before initiation of the reaction, a mixed solution of 2.64 g of methyl methacrylate, 0.30 g of allyl methacrylate, and 12

mg of sodium dodecylsulfate was added dropwise through the dropping funnel and the resulting mixture was heated for 3 hours to polymerize the second layer. The solution was left to cool to room temperature. As a result, a latex of a macromonomer having a two layer structure of polybutyl acrylate/polymethyl methacrylate (polymerization conversion: 98.9%, average particle size 140 nm) was obtained.

(EXAMPLE 2) Synthesis of macromonomer having two-layer structure

A latex of a macromonomer having a two-layer structure of polybutyl acrylate/polymethyl methacrylate was produced as in EXAMPLE 1 but with sodium gluconate instead of citric acid.

(EXAMPLE 3) Synthesis of macromonomer having two-layer structure

A latex of a macromonomer having a two-layer structure of polybutyl acrylate/polymethyl methacrylate was produced as in EXAMPLE 1 but with sodium oxalate instead of citric acid.

(EXAMPLE 4) Synthesis of macromonomer having two-layer structure

A latex of a macromonomer having a two-layer structure of polybutyl acrylate/polymethyl methacrylate was produced as in EXAMPLE 1 but with D-isoascorbic acid instead of sodium formaldehyde sulfoxylate.

(COMPARATIVE EXAMPLE 1) Synthesis of macromonomer having two-layer structure

A latex of a macromonomer having a two layer structure of polybutyl acrylate/polymethyl methacrylate was produced as in EXAMPLE 1 but with disodium ethylenediameine tetraacetate, i.e., a nitrogen coordination type chelating agent, instead of citric acid, i.e., an oxygen coordination type chelating agent.

Table 1

| EXAMPLES | Chelating agent | Reductant | Polymerization conditions | Polymerization conversion | Particle size |
|---|---|---|---|---|---|
| C. EX. 1 | Disodium ethylenediamine tetraacetate | Sodium formaldehyde sulfoxylate | 50°C , 2 h | 100% | 177 nm |
| EX. 1 | Citric acid | Sodium formaldehyde sulfoxylate | 50°C , 5 h | 99% | 140 nm |
| EX. 2 | Sodium gluconate | Sodium formaldehyde sulfoxylate | 50°C , 5 h | 97% | 91 nm |
| EX. 3 | Sodium oxalate | Sodium formaldehyde sulfoxylate | 50°C, 4 h | 98% | 129 nm |
| EX. 4 | Citric acid | D-Isoascorbic acid | 50°C , 5 h | 99% | 140 nm |
| Monomer: BA 100/MMA 17.6/AIMA 4 (parts by weight)<br>Redox initiator: chelating agent/ferrous sulfate/reductant/cumene hydroperoxide | | | | | |

(EXAMPLE 5) Synthesis of macromonomer having a three-layer structure of silicone/acryl

To an 8L separable glass flask (reactor) equipped with a stirrer, a thermometer, and a reflux condenser tube, 1600 g of octamethylcyclotetrasiloxane, 80 g of 3-acryloxypropylmethyldimethoxysilane, and 53 g of a 15% sodium dodecylbenzenesulfonate aqueous solution were fed, and the resulting mixture was emulsified by stirring with a homogenizer. To the resulting mixture, 160 g of a 10% dodecylbenzenesulfonic acid aqueous solution was added to render the mixture acidic. The resulting mixture was heated to an inner temperature of 80°C and maintained thereat for 6 hours under stirring with a mechanical stirrer to polymerize the silicone layer. The resulting mixture was left to cool and left to

stand at room temperature for one day for aging and then neutralized with a 0.1 N sodium hydroxide aqueous solution.

To a 1 L separable glass flask, 500 mL of this latex was charged, followed by nitrogen bubbling. To the latex, 5.0 mL of an aqueous solution of 10 mg of iron sulfate and 10 mg of citric acid was added, and then 1.38 mL of a 10 wt% sodium formaldehyde sulfoxylate aqueous solution was added. The resulting mixture was heated to 50°C under a nitrogen stream. To the mixture, 1.0 g of allyl methacrylate and 45 mg of cumene hydroperoxide were added, and reaction was conducted for 1 hour to make the first acryl layer by polymerization. Then 80 mg of cumene hydroperoxide was added, and a mixture of 20 g of methyl methacrylate and 0.5 g of allyl methacrylate was added dropwise immediately through the dropping funnel to make the second acryl layer by polymerization.

The resulting mixture was cooled to room temperature, and a latex of a macromonomer having a three structure constituted from one silicone layer and two acryl layers was obtained as a result (polymerization conversion: 99.0%, average particle size: 130 nm).

(EXAMPLES 6 to 9 and COMPARATIVE EXAMPLE 2) Copolymerization of macromonomer having a two-layer structure of poly(n-butyl acrylate)/polymethyl methacrylate with ethylene

A palladium complex (also referred to as "[N^N]PdMeCl" hereinafter) represented by chemical formula (3) below was synthesized by a known method described in literature such as J. Am. Chem. Soc. 1995, vol. 117, p. 6414 or the like:

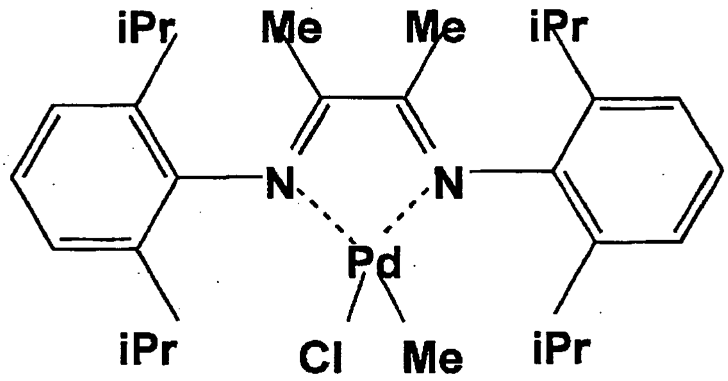

(3)

An 80 mmol/L diethyl ether solution (8 mL) of [N^N]PdMeCl was mixed with 8 mL of an 80 mmol/L diethyl ether solution of $LiB(C_6F_5)_4$, and LiCl was precipitated to prepare 16 mL of a 40 mmol/L diethyl ether solution of a [N^N] $PdMe^+ \cdot B(C_6F_5)_4^-$ complex.

In a Schlenk tube, 15 mL of the 40 mmol/L diethyl ether solution of the [N^N] $PdMe^+ \cdot B(C_6F_5)_4^-$ complex was placed, and diethyl ether was removed by depressurization at room temperature. Subsequently, 15 mL of methylene chloride was added and dissolved to prepare a 40 mmol/L methylene chloride solution of the [N^N] $PdMe^+ \cdot B\ (C_6F_5)_4^-$ complex. The latex (25 mL) obtained in each of EXAMPLES 1 to 4 and COMPARATIVE EXAMPLE 1 and 500 mg of sodium dodecylsulfate were mixed with 0.5 mL of the 40 mmol/L methylene chloride solution of the [N^N]$PdMe^+ \cdot B(C_6F_5)_4^-$ complex. To the resulting solution, 0.5 mL of methylene chloride was further added, and the resulting mixture was subjected to ultrasonic treatment for 5 minutes to homogeneously disperse the complex catalyst. This reaction mixture was placed in a nitrogen-purged pressure reactor, the pressure was adjusted to 2 MPa by introduction of ethylene, and the system was released after 7 hours of reaction at room temperature to remove unreacted ethylene. The product was obtained as a mixture of a latex and precipitates. The latex component was salted-out with an aqueous calcium chloride solution, and subjected to post-treatment including filtering, washing with water, and drying to obtain a polyolefin graft copolymer of the present invention. The amounts of the starting material macromonomers, ethylene consumption, and product yield are shown in Table 2. Ethylene consumptions during the reaction of EXAMPLES 1 to 3 and COMPARATIVE EXAMPLE 1 are plotted and shown in Fig. 1. The polymerization activity of ethylene was high in EXAMPLES 1 to 3, and ethylene maintained polymerization activity 400 minutes after the initiation of the reaction. Since COMPARATIVE EXAMPLE 1 contains disodium ethylenediamine tetraacetate, i.e., a nitrogen coordination type chelating agent, in the latex of the raw material macromonomer, polymerization of ethylene molecules was inhibited, and activity was lost in about 30 minutes.

The salted-out product of the latex (100 mg) was immersed in 100 mL of hexane at room temperature for 24 hours. Insoluble components remained as a result. These insoluble components were analyzed by $^1$H-NMR and were confirmed to contain both the macromonomer component and the polyethylene component. Since free polyethylene dissolves in hexane, the insoluble component is a (meth)acryl macromonomer-ethylene copolymer.

(EXAMPLE 10) Copolymerization of macromonomer having three-layer structure of silicone/acryl with ethylene

Into round-bottomed flask equipped with a three-way cock, 200 mg of sodium dodecylsulfate and 10 mL of water were charged to dissolve sodium dodecylsulfate. The flask was depressurized and degassed with an aspirator and purged with nitrogen. Under nitrogen stream, a 40 mmol/L methylene chloride solution of a [N^N] $PdMe^+ \cdot B(C_6F_5)_4^-$ complex was added through a syringe, and the resulting mixture was mixed and subjected to ultrasonic treatment for 5 minutes to emulsify the complex catalyst. Into another round-bottomed flask, 50 mL of the latex obtained in EXAMPLE 5 was placed, and the flask was depressurized, degassed, and purged with nitrogen. The emulsified catalyst was added to the latex with a syringe and homogeneously dispersed by 5 minutes of ultrasonic treatment.

A 100 mL autoclave was depressurized with an oil pump and purged with nitrogen. Subsequently, the reaction solution was charged through a syringe, the pressure was adjusted to 2 MPa by introduction of ethylene, and polymerization was conducted at room temperature for 7 hours under stirring with a magnetic stirrer. Upon a decrease in inner pressure, ethylene was additionally fed, and the ethylene consumption was calculated from the change in inner pressure. The unreacted ethylene was removed and the content was discharged. The resulting product was obtained as a mixture of a latex and precipitates. The latex component was poured into 150 mL of methanol, and 1 mL of an aqueous calcium chloride solution was added for salting-out. Filtration, washing with water, and drying were conducted to obtain a polyolefin graft copolymer of the present invention. The amounts of the raw material macromonomers charged, ethylene consumption, and product yield are shown in Table 2.

Table 2

| EXAMPLES | Macromonomer | Particle size of resulting Lx | Ethylene polymerization | Amounts of raw materials charged | | Yield | |
|---|---|---|---|---|---|---|---|
| | | | | PBA core | Et consumption | Lx salted out | Precipitates |
| C. EX. 2 | C. EX. 1 | 191 nm | Deactivated | 4.49 g | app. 0.6 g | 5.82 g | 0.07 g |
| EX. 6 | EX. 1 | 142 nm | PE formed | 5.64 g | app. 2.4 g | 6.03 g | 2.58 g |
| EX. 7 | EX. 2 | 85 nm | PE formed | 5.44 g | app. 2.1 g | 6.10 g | 1.77 g |
| EX. 8 | EX. 3 | 119 nm | PE formed | 5.64 g | app. 1.9 g | 6.57 g | 1.42 g |
| EX. 9 | EX. 4 | 194 nm | PE formed | 5.69 g | app. 1.1 g | 5.72 g | 0.95 g |
| EX. 10 | EX. 5 | 88 nm | PE formed | 5.72 g | app. 1.1 g | 5.83 g | 0.92 g |
| C. EX: COMPARATIVE EXAMPLE, EX: EXAMPLE<br>Core latex: sc 20%, 25 mL | | | | | | | |

(EXAMPLE 11) Copolymerization of macromonomer having two-layer structure of poly(n-butyl acrylate)/polymethyl methacrylate with 1-hexene

Into a 100 mL round-bottomed flask equipped with a stirring device and a nitrogen line, 25 mL of the latex obtained in EXAMPLE 1 and 500 mg of sodium dodecylsulfate were placed, followed by nitrogen bubbling. Subsequently, 0.5 mL of a 40 mmol/L methylene chloride solution of a [N^N]$PdMe^+ \cdot B(C_6F_5)_4^-$ complex was added thereto and homogeneously dispersed by stirring under nitrogen stream. To the resulting mixture, 3 mL of 1-hexene was added, and the mixture was allowed to react for 7 hours at room temperature and 1 atm. No resin mass was precipitated, and the product was totally obtained as a latex. The latex was salted-out in an aqueous calcium chloride solution, followed by post-treatment, i.e., filtering, washing with water, removal of unreacted monomers, and drying. A polyolefin graft copolymer resin of the present invention was obtained as a result. The salted-out product (100 mg) of this latex was immersed in 100 mL of hexane at room temperature for 24 hours. Insoluble components remained as a result. These insoluble components were analyzed by $^1H$ NMR and were thus confirmed to contain both the macromonomer component and the polyhexene component. Since free polyhexene dissolves in hexane, the insoluble component is a (meth)acryl macromonomer-hexene copolymer.

Industrial Applicability

When a single-layered (meth)acryl macromonomer or a multilayer macromonomer having a (meth)acrylic rubber-(meth)acryl hard shell structure is used, the polyolefin graft copolymer of the present invention exhibits properties that arise due to the polar characteristics or as a result of the polarity, such as low contact angle, high surface tension, surface wettability, adhesiveness, coatability, dyeing affinity, high dielectric constant, high-frequency sealing ability and the like. The polyolefin graft copolymer can be used as a polarity-imparting agent for thermoplastic resins, in particular, a polyolefin (imparting adhesiveness, coatability, dyeing affinity, high-frequency sealing property, and the like), a compatibilizer, a primer, a coating agent, an adhesive, paint, and a surfactant for a polyolefin/filler composite material or a polyolefin nanocomposite. The polyolefin graft copolymer can also be used in a thermoplastic elastomer containing a polyolefin as a resin component and (meth)acrylic rubber as a rubber component, and high-impact plastics.

When a multilayer macromonomer having a silicone rubber-(meth)acrylate hard shell structure is used as a raw material, the polyolefin graft copolymer of the present invention exhibits excellent low-temperature characteristics derived from low Tg and excellent functionalities derived from the silicon content, e.g., releasability from molds, moldability, gas permeability, water repellency, weather resistance, and surface lubricity. The polyolefin graft copolymer can be used for a low-temperature brittleness-improving agent for thermoplastic resins, in particular, polyolefins, a plasticizer, a flame retardant, a shock-resistance improver, a slidability-imparting agent, and the like.

A thermoplastic resin composition containing the graft copolymer of the present invention may contain common additives known in the fields of plastics and rubber industries, namely, a plasticizer, a stabilizer, a lubricant, a UV absorber, an antioxidant, a flame retarder, a flame retardant aid, a pigment, glass fibers, a filler, and a compounding agent such as a polymer processing aid or the like.

The process for obtaining the thermoplastic resin composition containing the graft copolymer of the present invention may be any generally known process for compounding a thermoplastic resin. For example, a thermoplastic resin, the graft copolymer of the present invention, and, if necessary, additive components may be melt-mixed using a thermal kneader, e.g., a single-screw extruder, a twin-screw extruder, rolls, a Banbury mixer, a brabender, a kneader, a high-shear mixer, or the like. The order of kneading the individual components is not particularly limited and may be adjusted according to the equipment used, workability, and properties of the thermoplastic resin composition to be formed.

When the thermoplastic resin is produced by emulsion polymerization, it is possible to blend the thermoplastic resin and the graft copolymer both in the form of latex, followed by codeposition (co-aggregation).

Examples of the process for molding the thermoplastic resin composition containing the graft copolymer include general molding processes for thermoplastic resin compositions, e.g., injection molding, extrusion molding, blow molding, and calender molding.

## Claims

1. A polyolefin graft copolymer produced from a macromonomer obtained by radical emulsion polymerization of a vinyl monomer using a redox initiator containing a polymerization initiator, an activator, a reductant, and an oxygen coordination type chelating agent.

2. The polyolefin graft copolymer according to claim 1, wherein the polyolefin graft copolymer is produced by copolymerizing an olefinic monomer and a macromonomer in the presence of a coordination polymerization catalyst in a latex.

3. The polyolefin graft copolymer according to claim 2, wherein the coordination polymerization catalyst is a complex comprising a ligand having two imine nitrogen atoms and a late transition metal selected from groups 8 to 10 in the periodic table.

4. A process for producing the polyolefin graft copolymer according to any one of claims 1 to 3.

5. A thermoplastic resin composition comprising the polyolefin graft copolymer according to any one of claims 1 to 3.

FIG. 1

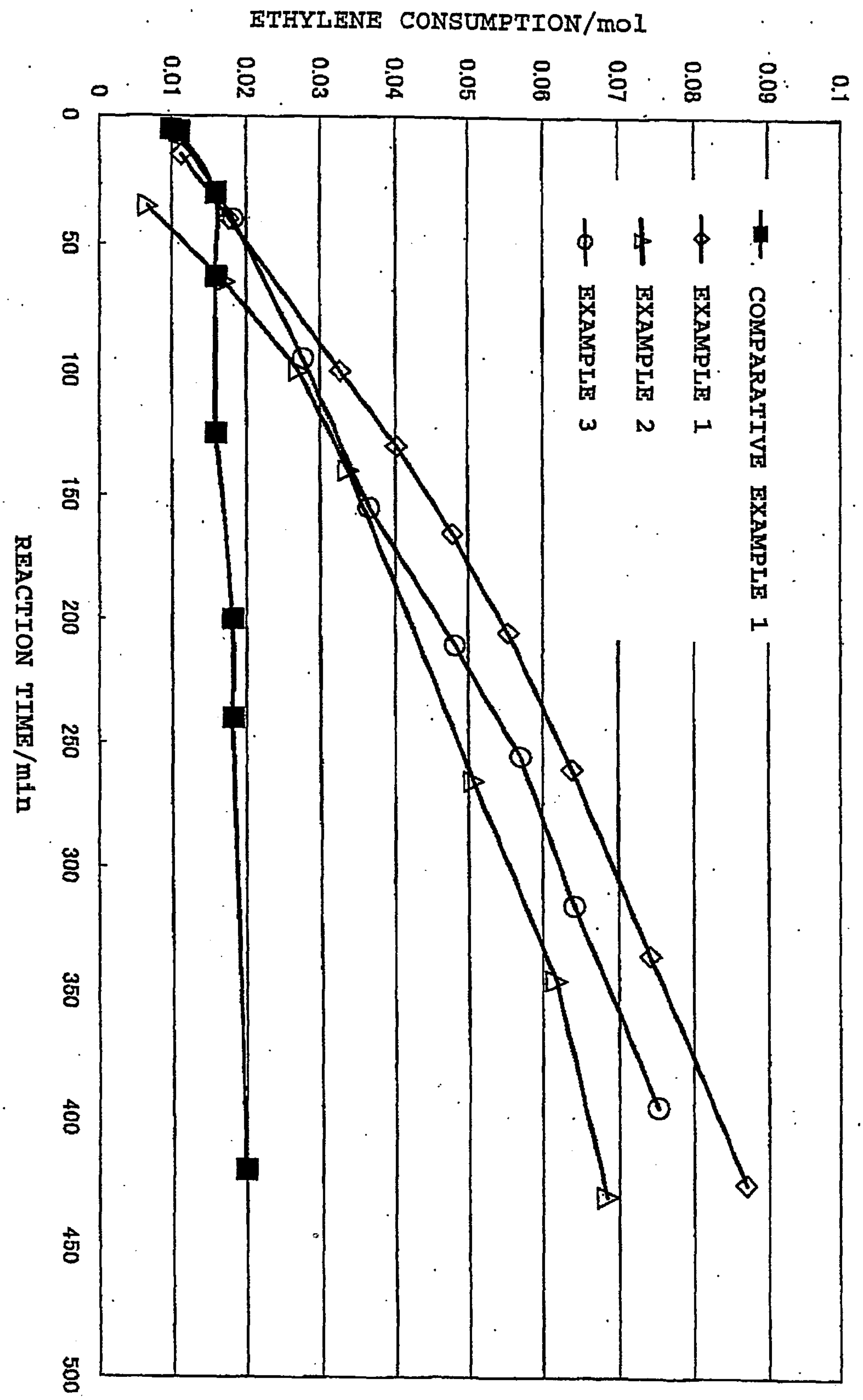
ETHYLENE CONSUMPTION/mol
0
0.01
0.02
0.03
0.04
0.05
0.06
0.07
0.08
0.09
0.1
COMPARATIVE EXAMPLE 1
EXAMPLE 1
EXAMPLE 2
EXAMPLE 3
0
50
100
150
200
250
300
350
400
450
500
REACTION TIME/min

**INTERNATIONAL SEARCH REPORT**

International application No.
PCT/JP2005/007045

A. CLASSIFICATION OF SUBJECT MATTER
Int.Cl[7] C08F290/12, C08F4/40

According to International Patent Classification (IPC) or to both national classification and IPC

B. FIELDS SEARCHED

Minimum documentation searched (classification system followed by classification symbols)
Int.Cl[7] C08F290/00-290/14, C08F4/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2003-147032 A (Kaneka Corp.),<br>21 May, 2003 (21.05.03),<br>Claims; example 12<br>& WO 03/20779 A1 & EP 1440988 A1<br>& US 2004-242790 A | 1-3,5<br>4 |
| A | JP 2003-12742 A (Idemitsu Petrochemical Co., Ltd.),<br>15 January, 2003 (15.01.03),<br>Claims; examples<br>(Family: none) | 1-5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
05 July, 2005 (05.07.05)

Date of mailing of the international search report
19 July, 2005 (19.07.05)

Name and mailing address of the ISA/
Japanese Patent Office

Authorized officer

Facsimile No.

Telephone No.

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003147032 A
- JP 2001089648 A
- JP 2002363372 A
- JP 10316724 A
- WO 9717380 A
- WO 9748740 A


### Non-patent literature cited in the description


- *Chemical Review,* 2000, vol. 100, 1169
- *Journal of Synthetic Organic Chemistry,* 2000, vol. 58, 293
- *Angewandte Chemie,* 2002, vol. 41, 544
- Polymer Handbook. John Wiley & Sons Inc
- *Chemical Review,* 2000, vol. 100, 1169-1203
- *Chemical Review,* 2003, vol. 103, 283-315
- *Angewandte Chemie,* 2002, vol. 41, 544-561
- *Chem. Commun.,* 2000, 301
- *Macromol. Symp.,* 2000, vol. 150, 53
- *Macromolecules,* 2003, vol. 36, 6711-6715
- *Macromolecules,* 2001, vol. 34, 1165
- *J. Am. Chem. Soc.,* 1995, vol. 117, 6414